# EUROPÄISCHE PATENTSCHRIFT

(11) **EP 1 753 985 B1**
(45) Veröffentlichungstag und Bekanntmachung des Hinweises auf die Patenterteilung: **21.05.2008**
(21) Anmeldenummer: 05716138.2
(22) Anmeldetag: 17.03.2005
(51) Int. Cl.: F16H 61/30, F15B 15/14, F16J 15/16, F16J 15/46

(54) **HYDRAULISCHER LINEARANTRIEB INSBESONDERE HYDRAULISCHER GETRIEBEAKTUATOR**
HYDRAULIC LINEAR DRIVE, ESPECIALLY HYDRAULIC TRANSMISSION ACTUATOR
ENTRAINEMENT LINEAIRE HYDRAULIQUE, EN PARTICULIER ACTIONNEUR DE TRANSMISSION HYDRAULIQUE

(30) Priorität: 07.05.2004 DE 102004022723
(43) Veröffentlichungstag der Anmeldung: 21.02.2007
(73) Patentinhaber: Dr. Ing. h.c. F. Porsche Aktiengesellschaft, 71287 Weissach (DE)
(72) Erfinder: BAUR, Peter, 71297 Mönsheim (DE); NASSIF, Serge, 67450 Mundolsheim (FR)
(86) Internationale Anmeldenummer: PCT/EP2005/002829
(87) Internationale Veröffentlichungsnummer: WO 2005/114007

(56) Entgegenhaltungen:
- EP-A- 0 602 425
- WO-A-02/079666
- DE-A1- 3 204 358
- DE-A1- 19 903 511
- US-A- 2 755 779
- US-A- 4 064 788
- PATENT ABSTRACTS OF JAPAN Bd. 008, Nr. 154 (M-310), 18. Juli 1984 (1984-07-18) & JP 59 050206 A (NISSAN JIDOSHA KK; others: 01), 23. März 1984 (1984-03-23)

## Beschreibung

Die Erfindung betrifft einen hydraulischen Linearantrieb, insbesondere einen hydraulischen Getriebeaktuator nach den Merkmalen des Oberbegriffs des Patentanspruchs 1.

Hydraulische Linearantriebe werden beispielsweise bei automatisierten Schaltgetrieben für die Synchronisierung der Getriebegänge eingesetzt (siehe beispielsweise Johannes Loomann, Zahnradgetriebe, 2. Auflage, Seite 156ff.).

Aus der DE 199 03 511 A1 ist ein auf einer Kolbenstange befestigter Arbeitskolben bekannt, der in einem Servozylinder geführt ist, wobei der Arbeitskolben in einer Ebene senkrecht zu seiner Längsachse geteilt ist. Dabei ist der Arbeitskolben auf der Kolbenstange formschlüssig befestigt, wobei der Arbeitskolben eine Nut enthält, in der ein Loskolben mit Dichtringen axial verschieblich eingesetzt ist.

Bei den gattungsgemäßen hydraulischen Linearantrieben wird der von zwei Druckräumen begrenzte Doppelkolben durch eine entsprechende Druckbeaufschlagung jeweils nach links oder rechts verschoben, wobei in vielen Anwendungsfällen eine Abdichtung der beiden Druckräume durch am Außenumfang des Kolbens angeordnete Dichtungselemente erfolgt.

Insbesondere bei hydraulischen Getriebeaktuatoren werden bei der Synchronisierung der Getriebezahnräder hohe Stellkräfte aufgebracht, die eine zuverlässige und dauerhafte Abdichtung bzw. Trennung der beiden Druckräume erfordern.

Aufgabe der Erfindung ist es daher, die Abdichtung der beiden Druckräume im Bereich der Kolbeneinheit zu verbessern. Die Aufgabe wird durch die im Anspruch 1 angegebenen Merkmale gelöst.

Dadurch, dass der Stellkolben zweiteilig ausgebildet und zwischen den beiden Kolbenteilen ein Dichtungselement angeordnet ist, wird letzt genanntes bei der Verstellung der Kolbeneinheit zwischen beiden Kolbenteilen eingespannt und aufgrund der bspw. bei der Synchronisierung des Getriebegangs aufzubringenden Stellkräfte in einem gewissen Umfang radial nach außen gedrückt, so dass die Abdichtung zwischen Stellkolben und Zylinderinnenwand auf vorteilhafte Art und Weise verbessert ist.

Das als Dichtungsring ausgebildete Dichtungselement ist auf einem Dichtungsträger aufgenommen, der auf einem der beiden Kolbenteile axial geführt ist.

Zur besseren axialen Führung des Dichtungsträgers greift dieser stirnseitig in das erste Kolbenteil ein.

Durch die in den Unteransprüchen angegebenen Merkmale sind weitere vorteilhafte Ausgestaltungen und Weiterbildungen des hydraulischen Linearantriebs möglich.

Der Dichtungsträger ist einteilig aus einem der beiden Kolbenteile herausgebildet oder alternativ dazu, als separates Bauteil zwischen den beiden Kolbenteilen angeordnet.

Der Dichtungsträger ist dabei auf vorteilhafte Art und Weise auf dem ersten Kolbenteil längsverschieblich gelagert, wobei zur Begrenzung der auf den Dichtungsring ausgeübten Anpresskraft die Relativbewegung des Dichtungsträgers durch zwei am ersten Kolbenteil ausgebildete Anschläge begrenzt ist.

Eine vorteilhafte und für die Anwendung als hydraulischer Getriebeaktuator angepasste Ausführungsform eines hydraulischen Linearantriebes ergibt sich, wenn die beiden Kolbenteile und das Zylindergehäuse gestuft ausgebildet sind. Durch den sich dadurch ausbildenden Stufenkolben kann in einem ersten Verstellweg durch einen kleinen Kolbendurchmesser eine hohe Verstellgeschwindigkeit mit geringer Reibung erreicht werden, während um den Synchronisationspunkt durch einen großen Kolbendurchmesser eine hohe Stellkraft und damit eine hohe radiale Anpresskraft des Dichtungsringes gegen die Zylindergehäuseinnenwand erzeugbar ist.

In der Mantelfläche des Kolbenteil - Abschnitts mit reduziertem Durchmesser ist eine Längsnut eingebracht, die jeweils einen ersten Hydraulikraumabschnitt mit einem zweiten Hydraulikraumabschnitt der beiden Stufenkolben verbindet.

An die beiden ersten Hydraulikraumabschnitte der beiden Stufenkolben ist jeweils eine Steuerleitung angeschlossen, die der Hydrauliköl - Zu- bzw. Abfuhr dient.

Zwei Ausführungsbeispiele der Erfindung sind in der Zeichnung dargestellt und werden im nachfolgenden näher beschrieben:

Es zeigen:
- Fig. 1: einen Linearantrieb mit einer hydraulischen Ansteuerung nach einem ersten Ausführungsbeispiel und
- Fig. 2: einen Linearantrieb mit einer hydraulischen Ansteuerung nach einem zweiten Ausführungsbeispiel.

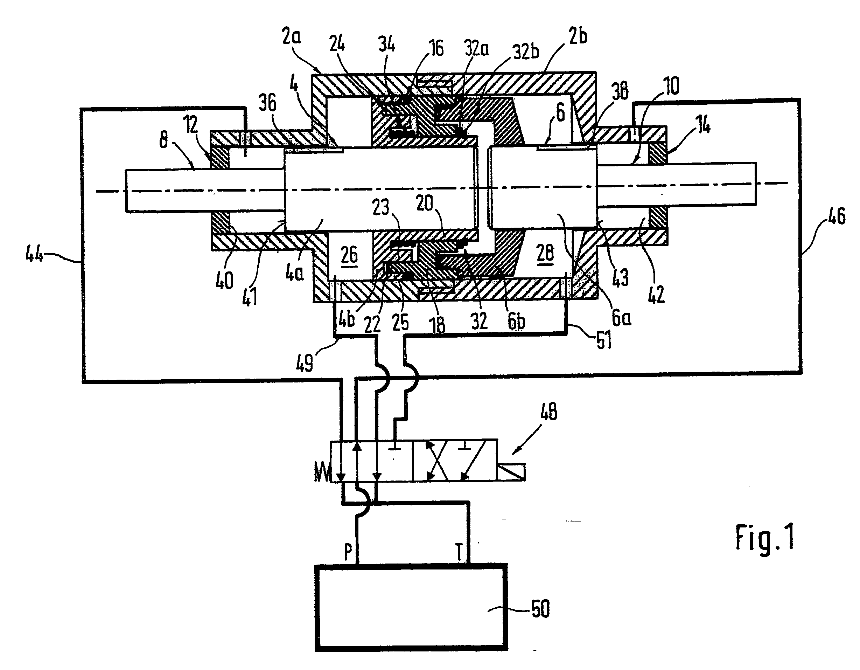

Der in Fig. 1 dargestellte hydraulische Linearantrieb, der beispielsweise als hydraulischer Getriebeaktuator für ein automatisiertes Schaltgetriebe einsetzbar ist, weist ein zweiteiliges Zylindergehäuse 2a und 2b auf, die beide an ihren Stirnseiten miteinander verbunden, vorzugsweise verschraubt, sind. In dem durch das Zylindergehäuse gebildeten Zylinderraum sind zwei Kolbenteile, im folgenden als Stufenkolben 4 und 6 bezeichnet, aufgenommen, die beide mit jeweils einer aus dem Zylindergehäuse 2 herausgeführten Kolbenstange 8 und 10 versehen, längsverschieblich im Zylindergehäuse 2 geführt sind. Die Abdichtung der beiden Kolbenstangen 8 und 10 erfolgt dabei über jeweils einen Dichtungsring 12 und 14. Die beiden Stufenkolben 4 und 6 weisen jeweils zwei Kolbenabschnitte 4a und 4b bzw. 6a und 6b auf, wobei zwischen den einander zugewandten Stirnseiten der mit einem größeren Durchmesser versehenen Kolbenabschnitten 4b und 6b ein Dichtungsträger 18 mit einem Dichtungsring 16 angeordnet ist. Der Dichtungsträger 18 ist auf einem inneren Ringflanschabschnitt 20 des Kolbenabschnitts 4b gelagert und an seiner rechten Stirnseite mit dem Kolbenabschnitt 6b des Stufenkolbens 6 verschraubt, während er an seiner linken Stirnseite mit einem Ringflansch 22 in eine zwischen einem mittleren Ringflanschabschnitt 23 und einem äußeren Ringflanschabschnitt 25 des Kolbenabschnitts 4b ausgebildeten Ringnut 24 verzahnend eingreift. Auf dem Ringflansch 22 ist der Dichtungsring 16 aufgeschoben, der die beiden durch die Stufenkolben 4 und 6 abgetrennten Druckräume 26 und 28 entsprechend voneinander abdichtet.

Zur Begrenzung des auf dem inneren Ringflanschabschnitts 20 längsverschieblich gelagerten Dichtungsträgers 18 ist ein linker und rechter Anschlag vorgesehen, wobei der linke Anschlag durch den mittleren Ringflanschabschnitt 23 des Kolbenabschnittes 4b und der rechte Anschlag 32 durch eine Anschlagscheibe 32a gebildet ist, die durch einen in eine Ringnut aufgenommenen Sprengring 32b axial gesichert ist. Auf dem inneren Ringflanschabschnitt 20 ist weiterhin eine Spiralfeder 34 angeordnet, die in einer zwischen inneren und mittleren Ringflanschabschnitt 20 und 23 sich ausbildenden Ringnut Aufnahme findet und somit zwischen Dichtungsträger 18 und Kolbenabschnitt 4b eingespannt wird.

Die beiden Kolbenabschnitte 4a bzw. 6a weisen eine in der Mantelfläche eingebrachte Längsnut 36 bzw. 38 auf, die den Druckraum 26 bzw. 28 mit einem zweiten Druckraum 40 bzw. 42 hydraulisch verbindet. Beide Druckräume 40 bzw. 42, im folgenden als erste Druckräume bezeichnet, werden dabei durch die Stirnseite 41 bzw. 43 des Kolbenabschnittes 4a bzw. 6a und der Stirnseite des Dichtungsringes 12 bzw. 14 begrenzt. An die beiden ersten Druckräume 40 und 42 ist jeweils eine Hydraulikleitung 44 bzw. 46 angeschlossen, über die mit Hilfe eines Schaltventils 48 diese Druckräume 40, 42 wahlweise mit Hydrauliköl aus einem Tank 50 versorgbar sind. An die beiden Druckräume 26 bzw. 28, im folgenden als zweite Druckräume bezeichnet, ist jeweils eine Rücklaufleitung 49 und 51 angeschlossen, die wahlweise über das Schaltventil 48 mit dem Tank 50 verbindbar sind.

Im nachfolgenden wird die Funktionsweise des hydraulischen Linearantriebs näher beschrieben:

Bei der in Fig. 1 dargestellten Schaltstellung des 7/2- Wegeventils 48 wird zur Verschiebung der beiden Stufenkolben 4 und 6 nach links über die Hydraulikleitung 46 der erste Druckraum 42 mit Hydrauliköl beaufschlagt. Durch die auf die Stirnseite 43 des Kolbenabschnitts 6a ausgeübte Stellkraft wird die aus den beiden Stufenkolben 4 und 6 bestehende Kolbeneinheit nach links verschoben, wobei nach einem ersten Verstellweg über die beide Druckräume 42 und 28 verbindende Längsnut 38 auch der zweite Druckraum 28 mit Hydrauliköl gefüllt wird. Nach einer weiteren Wegstrecke gelangt das Hydrauliköl ungedrosselt vom ersten Druckraum 42 in den zweiten Druckraum 28 und wirkt ausschließlich gegenüber dem im Durchmesser größer ausgebildeten Kolbenabschnitt 6b, so dass sich einerseits die Verstellgeschwindigkeit des Stellkolbens 4, 6 verringert, andererseits die auf den Stufenkolben 6 wirkende Stellkraft vergrößert wird. Gleichzeitig wird das im ersten und zweiten Druckraum 40 und 26 der gegenüberliegenden Seite befindliche Hydrauliköl über die Rückführleitung 49 und die Hydraulikleitung 44 in den Tank 50 zurückgeführt. Aufgrund der Tatsache, dass die Kolbeneinheit 4, 6 gegen einen Widerstand verschoben wird, bewirkt, dass der zwischen dem äußeren Ringflanschabschnitt 25 des Kolbenabschnittes 4b und dem Dichtungsträger 18 eingespannte Dichtungsring 16 elastisch verformt und damit radial gegen die Innenwand des Zylindergehäuses 2 gepresst wird.

Der hydraulische Linearantrieb ist z.B. als hydraulischer Getriebeaktuator einsetzbar, bei der eine in eine Schaltmuffeneinheit eingreifende Schaltgabel durch den Getriebeaktuator zur Herstellung einer drehfesten Verbindung zwischen Schaltmuffe und Gangzahnrad axial verschoben wird. Dabei wird über einen ersten Verstellweg mit Hilfe der beiden im Durchmesser kleiner ausgebildeten Kolbenabschnitte 4a bzw. 6a eine hohe Verstellgeschwindigkeit mit geringer Reibung erreicht, während um den Synchronisationspunkt eine hohe radiale Anpresskraft des Dichtringes 16 gegenüber der Zylinderinnenwand mit Hilfe der beiden im Durchmesser größer ausgebildeten Kolbenabschnitte 4b bzw. 6b erreichbar ist.

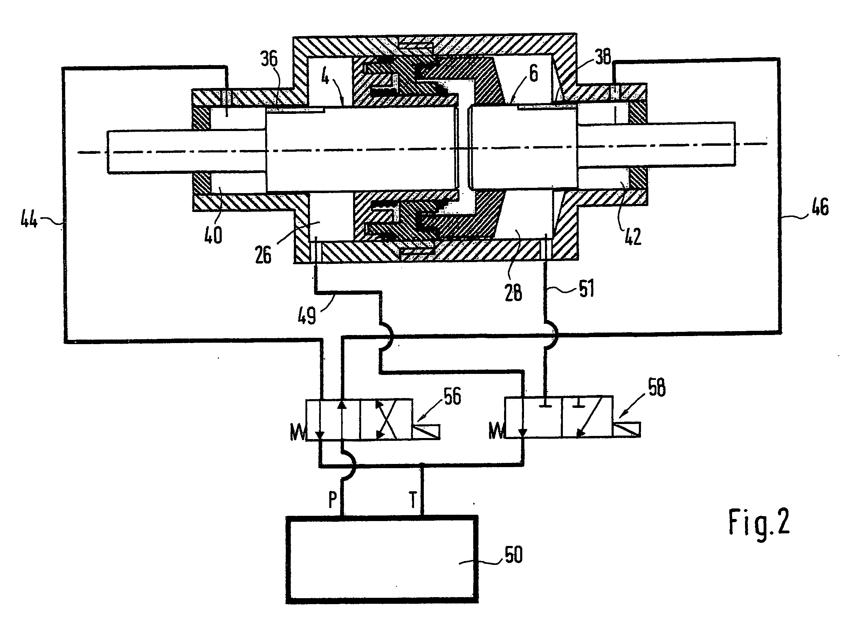

Das in Fig. 2 dargestellte zweite Ausführungsbeispiel des hydraulischen Linearantriebes unterscheidet sich lediglich in der hydraulischen Ansteuerung. Anstelle des im ersten Ausführungsbeispiels verwendeten 7/2 - Schaltventils 48 erfolgt nunmehr die Steuerung der Hydrauliköl - Zu- und Abfuhr über ein erstes 4/2 - Schaltventil 56 und ein zweites 3/2 - Schaltventil 58. Über das erste 4/2 - Schaltventil 56 sind die beiden ersten Druckräume 40 bzw. 42 wahlweise mit Hydrauliköl beaufschlagbar, während die Rückführung des Hydrauliköls aus den ersten beiden Druckräumen 26 bzw. 28 über das Schaltventil 58 gesteuert ist. Der Unterschied zum ersten Ausführungsbeispiel besteht darin, dass durch das jeweilige Schließen der Leitung 49 bzw. 51 das aus dem jeweiligen zweiten Druckraum 26 bzw. 28 in den Tank 50 zurückzuführende Hydrauliköl über die Längsnut 36 bzw. 38, den jeweiligen ersten Druckraum 40 bzw. 42 und die Hydraulikleitung 44 bzw. 46 zurückgeführt wird; dadurch ist eine zusätzliche Dämpfung der Verstellbewegung, insbesondere beim Erreichen einer der beiden Endlagen des Stellkolbens 4, 6 erreichbar.

## Patentansprüche

1. Hydraulischer Linearantrieb, insbesondere hydraulischer Getriebeaktuator, mit einer Kolben/Zylindereinheit, bei der ein im Zylindergehäuse (2) längsverschieblich angeordneter Stellkolben (4, 6) den Zylinderraum in mindestens zwei Druckräume (26, 28) unterteilt, die über Steuerleitungen (44, 46) mit Hydrauliköl beaufschlagbar sind, und mit einer mit dem Stellkolben (4, 6) verbundenen Kolbenstange (8, 10), sowie mit einem am Stellkolben (4, 6) angeordneten Dichtungselement (16), durch das die beiden Druckräume (26, 28) voneinander abgedichtet sind, wobei der Stellkolben zweiteilig ausgebildet ist und aus einem ersten und zweiten Kolbenteil (4, 6) besteht, zwischen dessen zugewandten Stirnseiten ein Dichtungselement (16) angeordnet ist, und für das Dichtungselement (16) ein Dichtungsträger (18) vorgesehen ist, der auf einem der beiden Kolbenteile (4, 6) axial geführt ist,
**dadurch gekennzeichnet, dass**
zur axialen Führung der Dichtungsträger (18) stirnseitig in das erste Kolbenteil (4) eingreift.

2. Hydraulischer Linearantrieb nach Anspruch 1, **dadurch gekennzeichnet, dass** der Dichtungsträger (18) einstückig aus dem zweiten Kolbenteil (6) herausgebildet ist.

3. Hydraulischer Linearantrieb nach Anspruch 1 oder 2, **dadurch gekennzeichnet, dass** der Dichtungsträger (18) als separates Bauteil zwischen den beiden Kolbenteilen (4, 6) angeordnet ist.

4. Hydraulischer Linearantrieb nach einem der Ansprüche 1 bis 3, **dadurch gekennzeichnet, dass** der Dichtungsträger (18) auf dem ersten Kolbenteil (4) längsverschieblich gelagert ist, wobei die Relativbewegung des Dichtungsträgers (18) durch zwei am ersten Kolbenteil (4) ausgebildete Anschläge (30, 32) begrenzt ist.

5. Hydraulischer Linearantrieb nach einem der vorhergehenden Ansprüche, **dadurch gekennzeichnet, dass** die beiden Kolbenteile (4, 6) als Stufenkolben ausgebildet sind.

6. Hydraulischer Linearantrieb nach Anspruch 5, **dadurch gekennzeichnet, dass** in der Mantelfläche eines Kolbenabschnitts (4a, 6a) eine Längsnut (36, 38) eingebracht ist, die jeweils einen ersten Druckraum (40, 42) mit einem zweiten Druckraum (26, 28) verbindet.

7. Hydraulischer Linearantrieb nach Anspruch 6, **dadurch gekennzeichnet, dass** die Hydraulikölzufuhr über jeweils eine Druckleitung (44, 46) erfolgt, die am zweiten Druckraum (40, 42) angeschlossen ist.

## Claims

1. Hydraulic linear drive, in particular hydraulic transmission actuator, having a piston/cylinder unit in which an actuating piston (4, 6), which is arranged in a longitudinally movable manner in the cylinder housing (2), divides the cylinder space into at least two pressure chambers (26, 28) which can be acted on with hydraulic oil via control lines (44, 46), and having a piston rod (8, 10) which is connected to the actuating piston (4, 6), and having a seal element (16) which is arranged on the actuating piston (4, 6), by means of which seal element (16) the two pressure spaces (26, 28) are sealed off from one another, with the actuating piston being of two-part design and being composed of a first and second piston part (4, 6), between the facing end sides of which is arranged a seal element (16), and a seal carrier (18) being provided for the seal element (16), which seal carrier (18) is guided axially on one of the two piston parts (4, 6),
**characterized in that**,
for axial guidance, the seal carrier (18) engages at the end side into the first piston part (4).

2. Hydraulic linear drive according to Claim 1, **characterized in that** the seal carrier (18) is formed in one piece from the second piston part (6).

3. Hydraulic linear drive according to Claim 1 or 2, **characterized in that** the seal carrier (18) is arranged, as a separate component, between the two piston parts (4, 6).

4. Hydraulic linear drive according to one of Claims 1 to 3, **characterized in that** the seal carrier (18) is mounted in a longitudinally movable manner on the first piston part (4), with the relative movement of the seal carrier (18) being limited by two stops (30, 32) formed on the first piston part (4).

5. Hydraulic linear drive according to one of the preceding claims, **characterized in that** the two piston parts (4, 6) are formed as stepped pistons.

6. Hydraulic linear drive according to Claim 5, **characterized in that** a longitudinal groove (36, 38) is formed in the lateral surface of a piston section (4a, 6a), which longitudinal groove (36, 38) connects in each case one first pressure space (40, 42) to a second pressure space (26, 28).

7. Hydraulic linear drive according to Claim 6, **characterized in that** the hydraulic oil supply takes place by means of in each case one pressure line (44, 46) which is connected to the second pressure space (40, 42).

## Revendications

1. Entraînement linéaire hydraulique, en particulier actionneur de transmission hydraulique, comprenant une unité cylindre-piston dans laquelle un piston de commande (4, 6) disposé de manière à pouvoir coulisser longitudinalement dans le boîtier de cylindre (2) divise la chambre du cylindre en au moins deux chambres de pression (26, 28) qui peuvent être sollicitées avec de l'huile hydraulique par le biais de conduites de commande (44, 46), et comprenant une tige de piston (8, 10) connectée au piston de commande (4, 6), ainsi qu'un élément d'étanchéité (16) disposé sur le piston de commande (4, 6), avec lequel les deux chambres de pression (26, 28) sont isolées hermétiquement l'une de l'autre, le piston de commande étant réalisé en deux parties et se composant d'une première et d'une deuxième partie de piston (4, 6), entre les côtés frontaux, tournés l'un vers l'autre, desquelles est disposé un élément d'étanchéité (16) et un support d'étanchéité (18) étant prévu pour l'élément d'étanchéité (16), lequel est guidé axialement sur l'une des deux parties de piston (4, 6),
**caractérisé en ce que**
pour le guidage axial, le support d'étanchéité (18) vient en prise du côté frontal dans la première partie de piston (4).

2. Entraînement linéaire hydraulique selon la revendication 1, **caractérisé en ce que** le support d'étanchéité (18) est réalisé d'une seule pièce à partir de la deuxième partie de piston (6).

3. Entraînement linéaire hydraulique selon la revendication 1 ou 2, **caractérisé en ce que** le support d'étanchéité (18) est disposé sous forme de composant séparé entre les deux parties de piston (4, 6).

4. Entraînement linéaire hydraulique selon l'une quelconque des revendications 1 à 3, **caractérisé en ce que** le support d'étanchéité (18) est monté de manière déplaçable en longueur sur la première partie de piston (4), le mouvement relatif du support d'étanchéité (18) étant limité par deux butées (30, 32) réalisées sur la première partie de piston (4).

5. Entraînement linéaire hydraulique selon l'une quelconque des revendications précédentes, **caractérisé en ce que** les deux parties de piston (4, 6) sont réalisées sous forme de piston étagé.

6. Entraînement linéaire hydraulique selon la revendication 5, **caractérisé en ce qu'**une rainure longitudinale (36, 38) est pratiquée dans la surface d'enveloppe d'une portion de piston (4a, 6a), qui relie à chaque fois une première chambre de pression (40, 42) à une deuxième chambre de pression (26, 28).

7. Entraînement linéaire hydraulique selon la revendication 6, **caractérisé en ce que** l'alimentation en huile hydraulique s'effectue à chaque fois par le biais d'une conduite de pression respective (44, 46), qui est raccordée à la deuxième chambre de pression (40, 42).
